# EUROPEAN PATENT SPECIFICATION

(11) **EP 4 334 047 B1**
(45) Date of publication and mention of the grant of the patent: **09.04.2025**
(21) Application number: 22724489.4
(22) Date of filing: 05.05.2022
(51) Int. Cl.: B09B 3/00

(54) **DEVICE AND METHOD FOR PROCESSING ORGANIC MATERIAL**
VORRICHTUNG UND VERFAHREN ZUM BEHANDELN VOM ORGANISCHEN MATERIAL
DISPOSITIF ET PROCÉDÉ POUR LE TRAITEMENT DE MATIÈRE ORGANIQUE

(30) Priority: 07.05.2021 BE 202105374
(43) Date of publication of application: 13.03.2024
(73) Proprietor: Dranco, Naamloze Vennootschap, 9000 Gent (BE)
(72) Inventor: SMIS, Piet Lodewijk Magdalena, 9890 Gavere (BE); HEYLBROECK, Wesley Jenny Raymond, 9820 Merelbeke (BE)
(74) Representative: Bureau M.F.J. Bockstael NV
(86) International application number: PCT/IB2022/054156
(87) International publication number: WO 2022/234507

(56) References cited:
- WO-A1-2005/113469

## Description

The present invention relates to a device and a method for processing organic material.

More specifically the invention is intended for anaerobically digesting organic material, whereby elements with high density are separated.

Various methods and installations are already known to anaerobically digest biodegradable organic material, whereby the organic material often contains relatively heavy elements with high density which are digested together with the organic fraction in the tank, after which the heavy elements together with the at least partly digested material are removed from the tank by means of an extraction system to subsequently be mixed with organic material to be digested in a mixing system, the mixture of which can be pumped back to the tank for digestion.

The aforementioned heavy elements can thus end up in the tank and go through the digestion process several times such that they may cause damage to the installation as well as accelerate the wear and tear of the extraction system and/or of the mixing system and/or of the pumps, which not only implies high costs but can also compromise business operations.

During the digesting process of the organic material, the heavy elements may sink to the bottom of the tank under the influence of gravity in the direction of the outlet and accumulate there.

A disadvantage of this is that blockages may occur on the level of the extraction system and/or the mixing system and/or the pumps.

WO2005/113469 A1 describes a device for processing organic material, whereby the organic material may also contain elements with high density, said device being provided with a tank with a digestion space and an inlet for supplying the organic material to be processed, whereby the device is provided with at least two sealable outlets, whereby one or more outlets are recycling outlets which are intended to discharge the at least partly digested organic material and in that at least one outlet is a residue outlet which is intended for discharging at least a part of the indigestible elements with high density, said residue outlet being located on a lower level than the one or more recycling outlets.

The purpose of the present invention is to provide a solution to the aforementioned and other disadvantages.

To this end, the invention relates to a device for processing organic material, whereby the organic material may also contain elements with high density, said device being provided with a tank with a digestion space and an inlet for supplying the organic material to be processed, whereby the device is provided with at least two sealable outlets, whereby one or more outlets are recycling outlets which are intended to discharge the at least partly digested organic material and at least one outlet is a residue outlet, which is intended for discharging at least a part of the indigestible elements with high density, said residue outlet being located on a lower level than the one or more recycling outlets and whereby the device contains a mixing pump for mixing the organic material to be digested with at least partly digested material and/or with external inoculum and for pumping the mixed mass via the inlet to the digestion space.

An advantage of this is that indigestible elements with high density can be discharged from the device relatively simply.

It is hereby possible that a quantity of at least partly digested material is discharged. However, the quantity of at least partly digested material that is lost is limited and preferably minimal.

Another advantage consists in that the aforementioned elements are removed from the tank such that the elements can undergo a separate post-treatment and can cause no more damage to the device and there is also less wear and tear of the device.

Yet another advantage is that when discharging the elements with high density from the digestion space, in this way the average concentration of the aforementioned elements in the digestion space will decrease to a level lower than the average concentration of the aforementioned elements in the organic material to be digested, such that the risk of accumulations in the device and blockages is greatly reduced.

Consequently, the operational reliability of the device is strongly increased.

The device allows the digestible waste to be digested by means of a dry digestion and this both for a relatively high dry matter percentage in the digestion space, thus with a high viscosity, and a low dry matter percentage in the digestion space, such that elements with high density can spontaneously sink down and/or this process can be accelerated.

Preferably, the outlet of the tank which is intended for discharging elements with high density, definitively or indefinitively, is the lowest-lying outlet such that the aforementioned elements can sink to said outlet under the influence of gravity and can be discharged from the digestion space relatively simply.

Preferably, the distance between the outlets is such that the elements with high density are removed from the tank mainly via the lowest-lying outlet and the at least partly digested organic material low in or free from elements with high density can be obtained by means of higher-lying outlets from the digestion space.

The device can be provided with a mixing pump for mixing organic material to be digested with the at least partly digested organic material and/or with external inoculum and pumping the mixed mass via at least one inlet to the digestion space.

An advantage of this is that such inoculum can encourage the processing of the organic material.

In addition, the device can be provided with one or more recycling pipes which are intended to discharge the at least partly digested material to the mixing pump where the at least partly digested material is mixed with organic material to be digested and/or if relevant with external inoculum after which the mixture can be added to the tank for the processing thereof.

An advantage of this is that a relatively pure fraction, in other words at least partly digested organic material low in or free from elements with high density, can be obtained via the recycling outlets and/or the recycling pipes, intended to be used substantially as inoculum, as well as to be discharged for further processing if relevant, for example for the production of compost.

An additional advantage of this is that the at least partly digested material can be considered as inoculum for the organic material to be digested such that no or only a limited quantity of external inoculum needs to be added such that the device can thus be self-sufficient.

In a preferred embodiment, the tank is provided with a gas outlet for removing biogas from the tank to maintain an optimum operation of the device.

In a practical embodiment the tank is provided with a conical bottom to encourage the guidance of the elements with high density to the lowest-lying outlet.

In a practical embodiment the device can be executed thus that the mixing pump, at regular intervals and if relevant automatedly, can pump at least partly digested material through one or several recycling pipes, either in the direction of the digestion space, or in the direction of the mixing pump.

An advantage of this is that the product stream through the recycling pipes created by the mixing pump can solve or prevent any blockages in the recycling outlets or the recycling pipes.

An additional advantage of this is that in the product stream created by the mixing pump along one or several recycling pipes and in case of simultaneous extraction via the lowest-lying outlet and/or via the other one or several recycling pipes a driving force may be generated which can accelerate the discharge of elements with high density along the lowest-lying outlet.

The present invention also relates to a method for processing organic material, whereby elements with high density are separated and a device as described above is used, said method containing the following steps:
- providing a device;
- supplying organic material via at least one inlet to the digestion space;
- at least partly digesting the organic material in the digestion space;
- extracting at least partly digested material low in or free from elements with high density via one or more recycling outlets;
- discharging at least a part of the elements with high density via the residue outlet;
whereby before supplying the organic material to the digestion space, the organic material is mixed with at least partly digested material and/or external inoculum in the mixing pump.

It is understood that the method of the device according to the invention offers the same aforementioned advantages as the device for processing organic material.

The elements with high density can be removed from the digestion space via the lowest-lying outlet by means of an extraction system to thus minimise damage and wear and tear to the device.

This method offers the advantage that a reduced concentration of elements with high density can be obtained in the digestion space such that the risk of blockages and/or accumulations in the device decreases strongly and operational reliability of the device strongly increases.

With the intention of better showing the characteristics of the invention, a preferred embodiment of the device according to the invention is described hereinafter, by way of an example without any limiting nature, and a method with reference to the accompanying drawings wherein:
figure 1 schematically shows a front view of a device according to the invention;
figure 2 shows a cross-section according to line II-II in figure 1;
The device 1 shown in figure 1 is intended for processing organic material by means of anaerobic digestion, whereby indigestible elements can be separated from the device 1.

Organic material is understood to mean, among others, biodegradable waste that may or may not be liquid and in particular can be completely or partly composed of the organic fraction of domestic waste and/or food waste streams and/or agricultural crops and/or green waste and/or garden waste and/or the like.

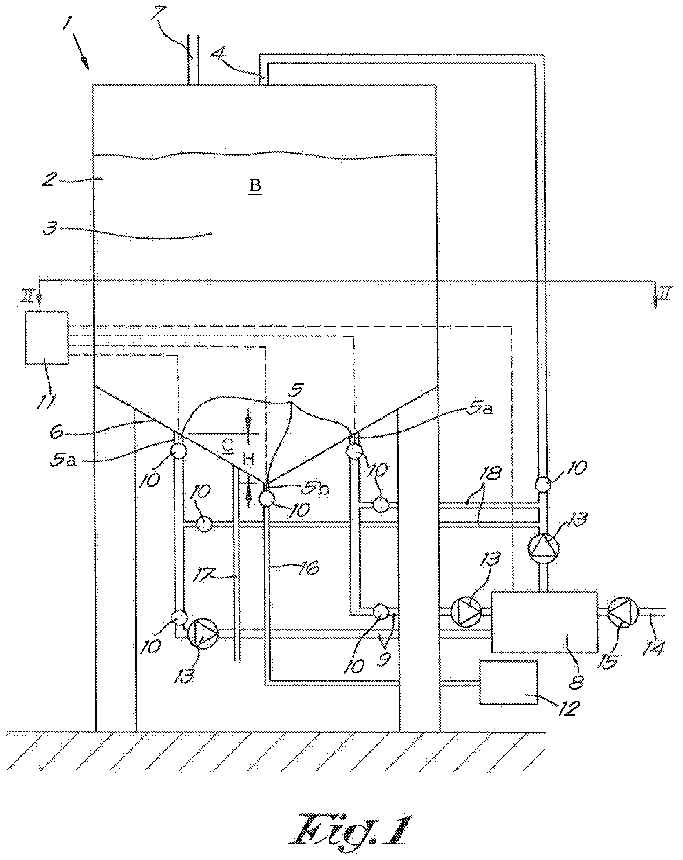

The device shown in figure 1 contains a tank 2 with a digestion space 3 and an inlet 4 for supplying the organic material to be digested.

Typically, such material also contains indigestible elements with a relatively high density.

High density is understood to mean elements with a density that is at least 50%, preferably 100% and most preferably 150% higher that the density of the digestible waste and/or at least partly digested material in the tank 2.

Preferably, such tank 2 is closed at the top.

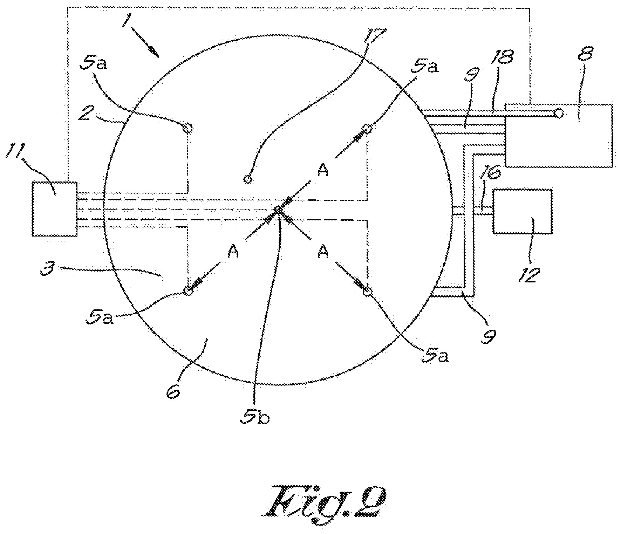

The device 1 is also provided with at least two sealable outlets 5, five outlets 5 in the case of figures 1 and 2.

Preferably, the sealable outlets 5 of the tank 2 are each provided with a valve to be able to open and close the outlets 5 separately at will.

At least one outlet 5 of the tank 2 is intended for extracting the at least partly digested organic material from the digestion space 3, said outlet 5 being the recycling outlet 5a and at least one outlet 5 is intended for discharging at least a part of the elements with high density, said outlet 5 being the residue outlet 5b.

In this case extracting is understood to mean removing at least partly digested organic material from the digestion space 3, said material intended to be used substantially for reuse as inoculum.

In this case, discharging is understood to mean removing at least partly digested organic material and/or undigested material and/or elements with high density from the digestion space 3 which, definitively or indefinitively, are taken out of the device, possibly for further processing.

The purpose of discharging elements with high density is, among others, removing the elements from the tank 2 to reduce and/or prevent any damage to the tank 2 or other parts of the device 1.

Typically, when discharging elements with high density a limited quantity of at least partly digested mass is discharged in which the elements are present.

Preferably, the quantity of at least partly digested mass that is hereby discharged and thus would be lost is minimal.

The residue outlet 5b and the recycling outlets 5a are located at least at height H at a distance from each other, whereby the residue outlet 5b is located at a lower level than the recycling outlets 5a.

Preferably, the distance A between the residue outlet 5b and the recycling outlets 5a is such that the elements with high density are mainly separated via the residue outlet 5b.

Preferably, the residue outlet 5b which substantially is intended for discharging elements with high density is thus the lowest-lying outlet.

In a practical embodiment, the tank 2 is provided with a conical bottom 6 whereby preferably the residue outlet 5b is located centrally in the tip of the conical bottom 6.

The distance A between residue outlet 5b and the recycling outlets 5a may also mutually differ.

Thus, it is not necessary that the distance A and/or the height H between the residue outlet 5b and the recycling outlets 5a is the same.

The digestion space 3 can imaginably be divided into a zone B in which organic material to be digested and/or at least partly digested material is present with a lower concentration of elements with high density than on average in the digestion space 3 and a zone C with at least partly digested organic material with a higher concentration of elements with high density than on average in the digestion space 3, whereby the transition between zones B and C is located approximately on the level of the recycling outlets 5a.

Preferably, the tank 2 is also provided with a gas outlet 7 for removing biogas from the tank 2, said gas outlet 7 being located in the case of figure 1 close to the inlet 4 at the top of the tank 2.

Biogas is understood to mean the gas that is released when anaerobically digesting the organic waste.

The device 1 can be provided with a mixing pump 8 for mixing the organic material to be digested with at least partly digested material and/or with external inoculum and pumping the mixed mass via the inlet 4 to the digestion space 3 to process the mixed mass.

The at least partly digested material can also serve as inoculum, such that the device 1 can be self-sufficient in this respect.

It is also possible to add water or other fluids to the at least partly digested material and/or material to be digested, preferably on the level of the mixing pump 8, to change the viscosity of the mass to be mixed to the desired viscosity, for example a viscosity lower than that of the material to be digested and/or at least partly digested material in the digestion space 3.

Consequently, the elements with high density in the digestion space 3 can sink more quickly through the at least partly digested organic material in the direction of the residue outlet 5b, such that an optimum separation of the aforementioned elements can be obtained.

In addition it is also possible to add water or other fluids to the mass to be mixed on the level of the recycling pipes 9.

However, it is also possible that the desired viscosity is higher than that of the material in the digestion space 3.

To this end, the device 1 can also be provided with one or more recycling pipes 9, four recycling pipes 9 in the example of figures 1 and 2, which are intended to discharge the at least partly digested material low in or free from elements with high density to the mixing pump 8 where the at least partly digested material is mixed with organic material to be digested after which the mixing pump 8 can pump the mixed mass to the digestion space 3.

Each recycling pipe 9 forms the connection between a recycling outlet 5a and the mixing pump 8 to discharge the at least partly digested material low in or free from elements with high density from the digestion space 3 to the mixing pump 8.

It is understood that the recycling outlets 5a can be connected to the mixing pump 8 in different ways and that the recycling pipes 9 can be realised in different ways as means that can move the at least partly digested organic material from and to the tank 2.

For extracting the at least partly digested material low in elements with high density the recycling pipes 9 can be provided with a discharge pump 13, for example one discharge pump 13 in each recycling pipe 9.

The device 1 may also contain means that can determine the ratio of organic material to be digested to at least partly digested material, which is adjustable or can be regulated by a controller 11.

Such means contain, for example one or more flow meters and/or one or more dosing systems for adding a fluid and/or material to be digested and/or the like.

Thus, the aforementioned recycling pipes 9 can be provided with a flow meter 10 for measuring the extracted flow, preferably a flow meter 10 in each recycling pipe 9.

The device 1 main contain a controller 11 which is in contact with the aforementioned flow meters 10 and the sealable outlets, whereby the controller 11 can control the sealable outlets to open in order to partly or wholly extract the at least partly digested mass from the tank 2 and to close when a flow meter 10 indicates that the desired extracted flow has been extracted from the tank 2.

Preferably, the controller 11 is also connected to the mixing pump 8 and/or the discharge pumps 13, such that the controller 11 can control the mixing pump 8 and/or the discharge pumps 13 to supply the mixed mass and/or at least partly digested waste to the digestion space 3 and/or to the mixing pump 3.

The elements with high density can be removed from the digestion space 3 via the residue outlet 5b by means of an extraction system 12 and possibly be discharged for a separate post-treatment.

Preferably, to this end, the residue outlet 5b is connected to the aforementioned extraction system 12 by means of one or more residue pipes 16.

Said residue pipe 16 can be provided with the aforementioned flow meter 10 for measuring and possibly registering the flow of material that leaves the digestion space 3 via the residue outlet 5b.

The device 1 can also be provided with one or more discharge pipes 17 for discharging the content from the digestion space 3.

Such discharge pipes 17 can be connected to the digestion space 3 and/or to the mixing pump 8 and/or branch off from the recycling pipes 9 and/or branch off from the residue pipes 16 and/or return pipes 18.

The purpose of the aforementioned discharge pipes 17 is to discharge the content or a part thereof from the digestion space 3 and/or from the mixing pump 8 and/or the recycling pipes 9 and/or the residue pipes 16 and/or return pipes 18 to prevent or remove any blockages.

Such discharge pipes 17 can also be used to test the quality of the content or a part thereof and/or to test for any contaminations and/or quantity of indigestible elements and/or other tests that are desired.

In a practical embodiment the device 1 can also be provided with one or more return pipes 18 which form a connection between the mixing pump 8 and the recycling pipes 9, said return pipes 18 being intended to allow the mixed mass or a part thereof to flow through the recycling pipes 9, either in the direction of the digestion space 3, or in the direction of the mixing pump 8, to solve and/or avoid any blockages.

An additional advantage of this is that when simultaneously discharging elements with high density via the residue outlet 5b and supplying the mixed mass via one or more recycling pipes 9 and/or one or more recycling outlets 5a, a driving force may be created that can accelerate the discharge of the elements with high density via the residue outlet 5b and/or solve and/or avoid any blockages.

The aforementioned controller 11 may also control the mixing pump 8 to pump the mixed mass or a part thereof to the return pipes 18 and thus to one or more recycling pipes 9.

Preferably, the controller 11 will simultaneously control the mixing pump 8 to pump the mixed mass or a part thereof to the digestion space 3 via the return pipes 18 and to extract the at least partly digested material low in or free from elements with high density from the digestion space 3 along the one or more remaining recycling outlets 5a such that a flow can be created in the digestion space 3 between two or more recycling pipes 9 which in turn can create a driving force which can accelerate the discharge of the elements with high density via the residue outlet 5b and/or solve and/or prevent any blockages.

In a preferred embodiment, the controller 11 is executed such that it controls the mixing pump 8 and/or the discharge pumps 13 at regular and/or predefined times to pump at least a part of the mixed mass and/or at least a part of the at least partly digested waste.

However, it is not necessary that the times are the same for pumping the mixed mass or a part thereof, definitively or indefinitively, and discharging the at least partly digested waste or a part thereof from the digestion space 3.

In a practical embodiment, the desired flow extracted via the recycling outlets 5a is equal to or practically equal to the flow that is added to the tank reduced with the quantity of produced biogas and the at least partly digested material that leaves the tank 2 via the gas outlet 7 and the residue outlet 5b.

In a preferred embodiment, for processing organic material the device 1 uses anaerobic digestion, preferably dry digestion.

Dry digestion is understood to mean digestion of organic material whereby the at least partly digested organic material in the digestion space 3 typically contains a dry matter percentage of at least 18%, preferably at least 15% and most preferably at least 12%.

The minimum of the dry matter percentage of, for example, 12% is not defining in the context of this invention and depends on the exact composition and/or structure and/or viscosity of the at least partly digested organic material and/or the like.

In a practical embodiment the mixing pump 8 and/or the inlets 4 and/or the recycling pipes 9 and/or return pipes 18 and/or residue pipes 17 and/or their associated outlets 5b can be connected to each other and/or the tank 2 in different ways without departing from the scope of the invention.

In a practical embodiment, the device 1 is or can be executed such that the at least partly digested material that would be lost when discharging elements with high density is collected and supplied as inoculum.

It is possible hereby that this at least partly digested material has been pre-treated for removing the elements with high density before it is reused as inoculum.

The present invention also relates to a method for processing organic material and separating elements with high density using a device as described above, said method containing the following steps:
- providing a device 1 according to the invention;
- supplying organic material via an inlet 4 to the digestion space 3;
- at least partly digesting the organic material in the digestion space 3;
- extracting at least partly digested material low in or free from elements with high density via one or more recycling outlets 5a;
- discharging at least a part of the elements with high density via the residue outlet 5b.

Before supplying the organic material to the digestion space 3, the organic material can be mixed with the at least partly digested material in the mixing pump 8 after which the mixed mass can be pumped to the digestion space 3.

Said organic waste can be supplied by means of a supply pipe 14 which ends in the mixing pump 8, said supply pipe 14 preferably being provided with a supply pump 15.

It is also possible to supply external inoculum to the organic waste and/or the mixed mass to encourage the digestion of the organic waste and/or mixture.

Preferably, said external inoculum is directly supplied to the digestion space 3 or during the mixing in the mixing pump 8.

The at least partly digested material low in or free from elements with high density can be supplied to the mixing pump 8 from the digestion space 3 via recycling pipes 9 of the tank 2.

The at least partly digested material with high concentration of elements with high density that is removed from the digestion space 3 via the residue outlet 5b by means of an extraction system 12 may possibly be discharged for a separate post-treatment.

## Claims

1. Device (1) for processing organic material, whereby the organic material may also contain elements with high density, said device (1) being provided with a tank (2) with a digestion space (3) and an inlet (4) for supplying the organic material to be processed, whereby the device (1) is provided with at least two sealable outlets (5), whereby one or more outlets (5) are recycling outlets (5a) which are intended to discharge the at least partly digested organic material and in that at least one outlet (5) is a residue outlet (5b) which is intended for discharging at least a part of the indigestible elements with high density, said residue outlet (5b) being located on a lower level than the one or more recycling outlets (5a) **characterized in that** the device (1) contains a mixing pump (8) for mixing the organic material to be digested with at least partly digested material and/or with external inoculum and for pumping the mixed mass via the inlet (4) to the digestion space (3).

2. Device according to claim 1, **characterised in that** the at least one residue outlet (5b), intended for discharging elements with high density, is the lowest-lying outlet.

3. Device according to claim 1 or 2, **characterised in that** the distance A and/or the height H between the outlets (5) is such that the elements with high density are removed from the tank (2) mainly via the residue outlet (5b).

4. Device according to any one of the previous claims, **characterised in that** the device (1) is provided with one or more recycling pipes (9) which form the connection between the recycling outlets (5a) and the mixing pump (8), said recycling pipes (9) being intended to discharge at least partly digested material to the mixing pump (8) where the at least partly digested material is mixed with organic material to be digested and/or with external inoculum.

5. Device according to claim 4, **characterised in that** the device (1) is provided with means which determine the ratio of organic material to be digested to recycled at least partly digested material, which is adjustable or can be regulated by a controller (11).

6. Device according to claim 5, **characterised in that** the device (1) is provided with means to add fluid with a lower viscosity than that of the material in the digestion space (3) such that the viscosity of the material in the digestion space (3) can be adjusted to thus accelerate the discharge of elements with high density from the residue outlet (5b).

7. Device according to claim 6, **characterised in that** the one or more recycling pipes (9) are provided with a flow meter (10) for measuring the extracted flow.

8. Device according to claim 7, **characterised in that** the device (1) is provided with a controller (11) which is in contact with the aforementioned flow meters (10) and the sealable outlets (5), said controller (11) being able to control the sealable outlets (5) to open in order to extract the at least partly or wholly digested mass from the tank (2) and to close when the flow meters (10) indicate that the desired extracted flow from the tank (2) is obtained.

9. Device according to any one of the previous claims, **characterised in that** the tank (2) is provided with at least one gas outlet (7) for removing biogas from the tank (2).

10. Device according to any one of the previous claims, **characterised in that** anaerobic digestion is used for processing organic material.

11. Device according to any one of the previous claims, **characterised in that** the tank (2) is provided with a conical bottom (6).

12. Device according to any one of the previous claims, **characterised in that** the device (1) is provided with one or more return pipes (18) which form a connection between the mixing pump (8) and one or more recycling pipes (9) such that the mixing pump (8) can pump the at least partly digested material or a part thereof to the recycling pipes (9) via the return pipes (18) to solve any blockages and/or to accelerate the discharge of elements with high density.

13. Method for processing organic material and separating indigestible elements with high density using a device (1) according to any one of the previous claims, whereby the method comprises the following steps:
- providing a device (1);
- supplying organic material via at least one inlet (4) to the digestion space (3);
- at least partly digesting the organic material in the digestion space (3);
- extracting the at least partly digested material low in or free from elements with high density via one or more recycling outlets (5a);
- discharging at least a part of the elements with high density via the residue outlet (5b);
**characterized in that** before supplying the organic material to the digestion space (3), the organic material is mixed with at least partly digested material and/or external inoculum in the mixing pump.

14. Method according to claim 13, **characterised in that** the at least partly digested material low in or free from elements with high density is supplied from the tank (2) to the mixing pump (8) via recycling pipes (9).

15. Method according to claims 13 or 14, **characterised in that** elements with high density are removed from the digestion space (3) via the residue outlet (5b) by means of an extraction system (12).

16. Method according to claim 15, **characterised in that** discharging elements with high density occurs regularly, either continuously, or discontinuously.

## Patentansprüche

1. Vorrichtung (1) zur Behandlung von einem organischen Material; wobei nicht ausgeschlossen ist, dass das organische Material auch Bestandteile enthält, die eine hohe Dichte aufweisen; wobei die oben genannte Vorrichtung (1) mit einem Behälter (2) ausgestattet ist, der einen Faulraum (3) und einen Einlass (4) umfasst, der dazu bestimmt ist, das zu behandelnde organische Material zuzuführen; wobei die Vorrichtung (1) mit mindestens zwei Auslässen (5) ausgestattet ist, die hermetisch verschlossen werden können; wobei ein oder mehrere Auslässe (5) Rückführungsauslässe (5a) darstellen, die dazu bestimmt sind, das zumindest teilweise ausgefaulte organische Material abzuleiten; und wobei mindestens ein Auslass (5) einen Auslass (5b) für Rückstände darstellt, der dazu bestimmt ist, mindestens einen Teil der unausfaulbaren Bestandteile, die eine hohe Dichte aufweisen, zu entfernen; wobei der oben genannte Auslass (5b) für die Rückstände auf einem niedrigeren Niveau als der genannte eine oder die genannten mehreren Rückführungsauslässe (5a) angebracht ist, **dadurch gekennzeichnet, dass** die Vorrichtung (1) eine Mischpumpe (8) enthält, die dazu bestimmt ist, das auszufaulende organische Material mit dem zumindest teilweise ausgefaulten Material und/oder mit einem externen Inokulum zu mischen sowie die gemischte Masse über den Einlass (4) in Richtung des Faulraums (3) zu pumpen.

2. Vorrichtung nach Anspruch 1, **dadurch gekennzeichnet, dass** der mindestens eine Auslass (5b) für Rückstände, der dazu bestimmt ist, Bestandteile, die eine hohe Dichte aufweisen, abzugeben, der unterste Auslass ist.

3. Vorrichtung nach Anspruch 1 oder 2, **dadurch gekennzeichnet, dass** der Abstand A und/oder die Höhe H, die sich zwischen den Auslässen (5) erstreckt/erstrecken, so ist/sind, dass die Bestandteile, die eine hohe Dichte aufweisen, hauptsächlich über den Auslass (5b) für Rückstände aus dem Tank (2) entfernt werden.

4. Vorrichtung nach einem der vorhergehenden Ansprüche, **dadurch gekennzeichnet, dass** die Vorrichtung (1) mit einem oder mehreren Recyclingrohren (9) ausgestattet ist, die die Verbindung zwischen den Rückführungsauslässen (5a) und der Mischpumpe (8) bilden; wobei die oben genannten Recyclingrohre (9) dazu bestimmt sind, das zumindest teilweise ausgefaulte Material in Richtung der Mischpumpe (8) abzuleiten, in der das zumindest teilweise ausgefaulte Material mit dem auszufaulenden organischen Material und/oder mit einem externen Inokulum vermischt wird.

5. Vorrichtung nach Anspruch 4, **dadurch gekennzeichnet, dass** die Vorrichtung (1) mit Mitteln ausgestattet ist, die das Verhältnis zwischen dem auszufaulenden organischen Material und dem zumindest teilweise ausgefaulten, rezirkulierten Material bestimmen, wobei das Verhältnis einstellbar oder über eine Steuereinrichtung (11) regelbar ist.

6. Vorrichtung nach Anspruch 5, **dadurch gekennzeichnet, dass** die Vorrichtung (1) mit Mitteln ausgestattet ist, die dazu bestimmt sind, ein Fluid zuzugeben, das eine niedrigere Viskosität als das in dem Faulraum (3) vorhandene Material aufweist, so dass die Viskosität des in dem Faulraum (3) vorhandenen Materials so eingestellt werden kann, dass die Entfernung von den Bestandteilen, die eine hohe Dichte aufweisen, von dem Auslass (5b) für Rückstände beschleunigt wird.

7. Vorrichtung nach Anspruch 6, **dadurch gekennzeichnet, dass** die eine oder mehreren Recyclingrohre (9) mit einem Durchflussmesser (10) ausgestattet sind, der dazu bestimmt ist, den abgezogenen Durchfluss zu messen.

8. Vorrichtung nach Anspruch 7, **dadurch gekennzeichnet, dass** die Vorrichtung (1) mit einer Steuervorrichtung (11) ausgestattet ist, die mit den oben erwähnten Durchflussmessern (10) und mit den hermetisch verschließbaren Auslässen (5) in Kontakt gebracht wird; wobei die Steuervorrichtung (11) in der Lage ist, das Öffnen der dicht verschließbaren Auslässe (5) zu steuern, um die zumindest teilweise oder vollständig ausgefaulte Masse aus dem Behälter (2) zu entnehmen, sowie deren Schließung, wenn die Durchflussmesser (10) anzeigen, dass der gewünschte aus dem Behälter (2) entnommene Durchfluss erzielt wurde.

9. Vorrichtung nach einem der vorhergehenden Ansprüche, **dadurch gekennzeichnet, dass** der Behälter (2) mit mindestens einem Auslass (7) für Gas ausgestattet ist, der dazu bestimmt ist, das Biogas aus dem Behälter (2) zu entfernen.

10. Vorrichtung nach einem der vorhergehenden Ansprüche, **dadurch gekennzeichnet, dass** für die Behandlung des organischen Materials eine anaerobe Faulung verwendet wird.

11. Vorrichtung nach einem der vorhergehenden Ansprüche, **dadurch gekennzeichnet, dass** der Behälter (2) mit einem Boden (6) ausgestattet ist, der eine konische Form aufweist.

12. Vorrichtung nach einem der vorhergehenden Ansprüche, **dadurch gekennzeichnet, dass** die Vorrichtung (1) mit einer oder mehreren Rückführleitungen (18) ausgestattet ist, die eine Verbindung zwischen der Mischpumpe (8) und einer oder mehreren Rückführleitungen (9) bilden, so dass die Mischpumpe (8) in der Lage ist, das zumindest teilweise ausgefaulte Material oder einen Teil davon in Richtung der Recyclingrohre (9) über die Rückführleitungen (18) zu pumpen, um etwaige Verstopfungen zu beseitigen und/oder die Abführung von den Bestandteilen, die eine hohe Dichte aufweisen, zu beschleunigen.

13. Verfahren zur Behandlung von organischem Material und zur Abtrennung von unausfaulbaren Bestandteilen, die eine hohe Dichte aufweisen, unter Verwendung einer Vorrichtung (1) gemäß einem der vorstehenden Ansprüche; wobei das Verfahren die folgenden Schritte umfasst, in denen:
- eine Vorrichtung (1) angebracht wird;
- ein organisches Material durch mindestens einen Einlass (4) in den Faulraum (3) geleitet wird;
- das organische Material in dem Faulraum (3) zumindest teilweise ausgefault wird;
- das zumindest teilweise ausgefaulte Material, das einen geringen oder keinen Gehalt an Bestandteilen, die eine hohe Dichte aufweisen, aufweist, über einen oder mehrere Rückführungsauslässe (5a) abgezogen wird;
- zumindest ein Teil der Bestandteile, die eine hohe Dichte aufweisen, über den Auslass (5b) für Rückstände abgeführt wird;
**dadurch gekennzeichnet, dass** vor der Zuführung des organischen Materials in den Faulraum (3) das organische Material mit dem zumindest teilweise ausgefaulten Material und/oder mit einem externen Inokulum in der Mischpumpe vermischt wird.

14. Verfahren nach Anspruch 13, **dadurch gekennzeichnet, dass** man das zumindest teilweise aufgeschlossene Material, das einen geringen oder keinen Gehalt an Bestandteilen, die eine hohe Dichte aufweisen, aufweist, aus dem Behälter (2) über Rückführleitungen (9) in Richtung der Mischpumpe (8) führt.

15. Verfahren nach Anspruch 13 oder 14, **dadurch gekennzeichnet, dass** man aus dem Faulraum (3) die Bestandteile, die eine hohe Dichte aufweisen, über den Auslass (5b) für Rückstände mittels eines Extraktionssystems (12) entfernt.

16. Verfahren nach Anspruch 15, **dadurch gekennzeichnet, dass** die Abführung der Bestandteile, die eine hohe Dichte aufweisen, gleichmäßig erfolgt, entweder kontinuierlich oder diskontinuierlich.

## Revendications

1. Dispositif (1) destiné au traitement d'une matière organique ; dans lequel il n'est pas exclu que la matière organique contienne également des éléments qui présentent une masse volumique élevée ; dans lequel ledit dispositif (1) est équipé d'une cuve (2) qui comprend un espace de digestion (3) et une entrée (4) qui est destinée à l'acheminement de la matière organique qui doit être traitée ; dans lequel le dispositif (1) est équipé d'au moins deux sorties (5) qui peuvent être hermétiquement fermées ; dans lequel une ou plusieurs sorties (5) représentent des sorties (5a) de remise en circulation qui sont destinées à l'évacuation de la matière organique qui a été digérée au moins en partie ; et dans lequel au moins une sortie (5) représente une sortie (5b) pour les résidus, qui est destinée à l'évacuation d'au moins une partie des éléments non digestibles qui présentent une masse volumique élevée ; dans lequel ladite sortie (5b) pour les résidus est disposée à un niveau inférieur à celui desdites une ou plusieurs sorties (5a) de remise en circulation, **caractérisé en ce que** le dispositif (1) contient une pompe de mélange (8) qui est destinée à mélanger, avec une matière qui a été digérée au moins en partie et/ou avec un inoculum externe, la matière organique qui doit être digérée, ainsi qu'à pomper la masse mélangée en passant par l'entrée (4) dans la direction de l'espace de digestion (3).

2. Dispositif selon la revendication 1, **caractérisé en ce que** ladite au moins une sortie (5b) pour les résidus, qui est destinée à l'évacuation des éléments qui présentent une masse volumique élevée, représente la sortie qui se trouve le plus bas.

3. Dispositif selon la revendication 1 ou 2, **caractérisé en ce que** la distance A et/ou la hauteur H qui s'étend(ent) entre les sorties (5) est/sont telle(s) que les éléments qui présentent une masse volumique élevée sont éliminés de la cuve (2) à titre principal en passant par la sortie (5b) pour les résidus.

4. Dispositif selon l'une quelconque des revendications précédentes, **caractérisé en ce que** le dispositif (1) est équipé d'un ou de plusieurs conduits (9) de remise en circulation, qui forment la liaison entre les sorties (5a) de remise en circulation et la pompe de mélange (8) ; dans lequel lesdits conduits (9) de remise en circulation sont destinés à l'évacuation de la matière qui a été digérée au moins en partie dans la direction de la pompe de mélange (8) dans laquelle la matière qui a été digérée au moins en partie est mélangée avec la matière organique qui doit être digérée et/ou avec un inoculum externe.

5. Dispositif selon la revendication 4, **caractérisé en ce que** le dispositif (1) est équipé de moyens qui déterminent le rapport entre la la matière organique qui doit être digérée et la matière remise en circulation qui a été digérée au moins en partie, ledit rapport pouvant être ajusté ou pouvant être réglé par l'intermédiaire d'un dispositif de commande (11).

6. Dispositif selon la revendication 5, **caractérisé en ce que** le dispositif (1) est équipé de moyens qui sont destinés à ajouter un fluide qui présente une viscosité inférieure à celle de la matière présente dans l'espace de digestion (3), d'une manière telle que la viscosité de la matière présente dans l'espace de digestion (3) peut être ajustée d'une façon telle que l'on accélère l'évacuation des éléments qui présentent une masse volumique élevée à l'écart de la sortie (5b) pour les résidus.

7. Dispositif selon la revendication 6, **caractérisé en ce que** lesdits un ou plusieurs conduits (9) de remise en circulation sont équipés d'un débitmètre (10) qui est destiné à mesurer le flux extrait.

8. Dispositif selon la revendication 7, **caractérisé en ce que** le dispositif (1) est équipé d'un dispositif de commande (11) qui est mis en contact avec les débitmètres (10) qui ont été mentionnés ci-dessus et avec les sorties (5) qui peuvent être hermétiquement fermées ; dans lequel ledit dispositif de commande (11) est capable de commander l'ouverture des sorties (5) qui peuvent être hermétiquement fermées afin d'extraire de la cuve (2) la masse qui a été digérée au moins en partie ou de manière complète, ainsi que leur fermeture lorsque les débitmètres (10) indiquent que le flux extrait désiré à partir de la cuve (2) a été obtenu.

9. Dispositif selon l'une quelconque des revendications précédentes, **caractérisé en ce que** la cuve (2) est équipée d'au moins une sortie (7) pour le gaz, qui est destinée à éliminer le biogaz de la cuve (2).

10. Dispositif selon l'une quelconque des revendications précédentes, **caractérisé en ce que** l'on utilise une digestion de type anaérobie pour le traitement de la matière organique.

11. Dispositif selon l'une quelconque des revendications précédentes, **caractérisé en ce que** la cuve (2) est équipée d'une base (6) qui présente une forme conique.

12. Dispositif selon l'une quelconque des revendications précédentes, **caractérisé en ce que** le dispositif (1) est équipé d'un ou de plusieurs conduits de retour (18) qui forment une liaison entre la pompe de mélange (8) et un ou plusieurs conduits de remise en circulation (9), d'une manière telle que la pompe de mélange (8) est en mesure de pomper ladite matière qui a été digérée au moins en partie ou une partie de cette dernière dans la direction des conduits (9) de remise en circulation en passant par les conduits de retour (18) dans le but de supprimer quelles qu'obstructions que ce soient et/ou d'accélérer l'évacuation des éléments qui présentent une masse volumique élevée.

13. Procédé destiné au traitement d'une matière organique et à la séparation d'éléments non digestibles qui présentent une masse volumique élevée en utilisant un dispositif (1) en conformité avec l'une quelconque des revendications précédentes ; dans lequel le procédé comprend les étapes suivantes au cours desquelles :
- on procure un dispositif (1) ;
- on achemine une matière organique à l'espace de digestion (3) en passant par au moins une entrée (4) ;
- on procède à une digestion au moins partielle de la matière organique dans l'espace de digestion (3) ;
- on extrait la matière qui a été digérée au moins en partie et qui présente une faible teneur ou une teneur nulle en éléments qui présentent une masse volumique élevée, en passant par une ou plusieurs sorties (5a) de remise en circulation ;
- on évacue au moins une partie des éléments qui présentent une masse volumique élevée en passant par la sortie (5b) pour les résidus ;
**caractérisé en ce que**, avant d'acheminer la matière organique à l'espace de digestion (3), on mélange la matière organique avec la matière qui a été digérée au moins en partie et/ou avec un inoculum externe dans la pompe de mélange.

14. Procédé selon la revendication 13, **caractérisé en ce que** l'on achemine, à partir de la cuve (2), dans la direction de la pompe de mélange (8), en passant par des conduits (9) de remise en circulation, la matière qui a été digérée au moins en partie et qui présente une faible teneur ou une teneur nulle en éléments qui présentent une masse volumique élevée.

15. Procédé selon la revendication 13 ou 14, **caractérisé en ce que** l'on retire de l'espace de digestion (3), en passant par la sortie (5b) pour les résidus, les éléments qui présentent une masse volumique élevée, au moyen d'un système d'extraction (12).

16. Procédé selon la revendication 15, **caractérisé en ce que** l'évacuation des éléments qui présentent une masse volumique élevée a lieu de manière régulière, soit en continu, soit en discontinu.
